# FASCICULE DE BREVET EUROPEEN

(11) **EP 1 820 991 B1**
(45) Date de publication et mention de la délivrance du brevet: **11.11.2009**
(21) Numéro de dépôt: 07300758.5
(22) Date de dépôt: 31.01.2007
(51) Int. Cl.: F16D 23/04, F16D 13/34

(54) **Dispositif de couplage par cones de friction pour boîte de vitesses**
Vorrichtung zur Kopplung mittels Reibkegeln für Getriebe
Friction cone coupling device for a gearbox

(30) Priorité: 16.02.2006 FR 0650563
(43) Date de publication de la demande: 22.08.2007
(73) Titulaire: RENAULT S.A.S., 92100 Boulogne Billancourt (FR)
(72) Inventeur: Raoul, Michel, 78990 Elancourt (FR)
(74) Mandataire: Rougemont, Bernard

(56) Documents cités:
- EP-A- 1 411 257
- EP-A1- 1 118 787
- FR-A1- 2 821 652

## Description

La présente invention se rapporte aux synchroniseurs pour boîte de vit esses mécanique ou robot isée.

Plus précisément, elle concerne un dispositif de couplage entre un arbre de boîte de vitesses et un pignon f ou porté par celui-ci, comportant un moyeu fixé sur l'arbre, et des moyens de couplage propres à égaliser par frottement les vitesses de l'arbre et du pignon et à transformer le mouvement de rotation reçu du moyeu, en poussée axiale sur le pignon, de manière à transmettre eux-mêmes par friction le couple entre le moyeu et le pignon.

Ces moyens comprennent un ensemble de synchronisation multi-cônes, dont un anneau supérieur est solidaire du moyeu, un anneau intermédiaire est solidaire du pignon, un anneau inférieur est solidaire du moyeu et enfin un cône est solidaire du pignon. Un ressort de mise au repos, agit sur l'anneau supérieur, en repoussant ce dernier vers le moyeu à l'écart des autres anneaux.

Dans un tel dispositif, le baladeur ne présente pas de denture de crabotage, mais les moyens de couplage transforment le mouvement de rotation reçu du moyeu en poussée axiale contre le pignon, de façon à transmettre eux-mêmes le couple mot eur entre le moyeu et le pignon, en exerçant sur celui-ci une pression constante.

Par la publication FR 2 821 652, on connaît un synchroniseur particulier, dit à «cônes de frottement auto-bloquants», où les moyens de couplage sont const it ués par un ensemble de synchronisat ion multi-cônes, comprenant un anneau supérieur solidaire en rotation du moyeu, un anneau conique intermédiaire, et un anneau conique inférieur.

Dans ce synchroniseur, l'anneau conique inférieur est monté sur un flasque immobilisé par des cannelures sur le pignon f ou. L'anneau supérieur et l'anneau inférieur sont solidaires du moyeu, tandis que l'anneau intermédiaire et le cône sont solidaires en rotation du pignon fou par l'intermédiaire du flasque.

La mise en service du disposit if de couplage est assurée par le déplacement axial des anneaux et par la mise en contact des surfaces coniques en vis à vis, à l'aide d'un baladeur de type roulement à billes, dont le déplacement axial est obtenu par le mouvement axial d'une fourchette qui encercle le roulement.

Pour que ce dispositif de couplage puisse fonctionner correctement, il est nécessaire que l'application de l'effort sur l'anneau extérieur ne soit pas localisée angulairement mais réparti au mieux sur toute la zone angulaire (360°) d'application de l'effort. Dans un contexte de boîte de vitesses où nous avons des déformations sous charge, des dispersions de fabrication, des mises en biais, l'application de l'effort est imparfaite, nuit au fonctionnement, et réduit les performances en couple et dissipation d'énergie du coupleur.

Dans ce but, l'invention propose un dispositif de couplage selon la revendication 1.

D'autres caractéristiques et avantages de la présente invention apparaîtront à la lecture de la description suivante d'un mode de réalisation non limitatif de celle-ci, en se reportant aux dessins annexés, sur lesquels :
- la figure 1 est une vue partielle d'une boîte de vitesses équipée de dispositifs de couplage de type de coupleur conique.
- la figure 2 est une vue et une coupe de l'anneau supérieur du dispositif proposé, et
- la figure 3 est une coupe de la figure 2.

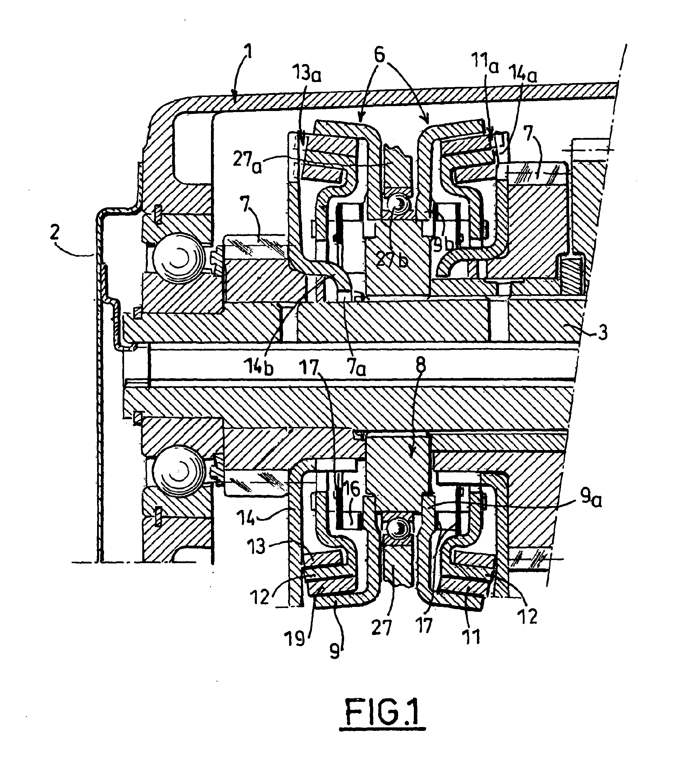

Sur la figure 1, on a représenté dans un carter 1 de boîte de vitesses, fermé par un couvercle 2, l'arbre primaire 3, un dispositif de couplage entre l'arbre primaire 3, et deux pignons fous 7, portés par celui-ci. Ce dispositif, composé de deux coupleurs coniques symétriques 6, est montré en position de repos. Il comporte un moyeu 8, fixé sur l'arbre 3, et des moyens de couplage entre le moyeu 8 et les pignons 7. Ces moyens incluent un ensemble de synchronisation multi-cônes composé d'un anneau supérieur 9 solidaire du moyeu, d'un anneau intermédiaire 11 solidaire du pignon 7, d'un anneau inférieur 12 solidaire du moyeu 8, et d'un dernier anneau, ou cône, 13 solidaire du pignon 7. Le cône 13 et l'anneau intermédiaire 11 sont solidaires d'un flasque 14 lié au pignon. Les moyens de couplage comprennent également un ressort 16 de rappel en position de repos, tel qu'une rondelle ondulée disposée entre deux rondelles planes 17 retenues par un « circlips » 18. Le ressort 16 agit sur l'anneau supérieur 9, en repoussant ce dernier vers le moyeu 8 à l'écart des autres anneaux, 11, 12, 13.

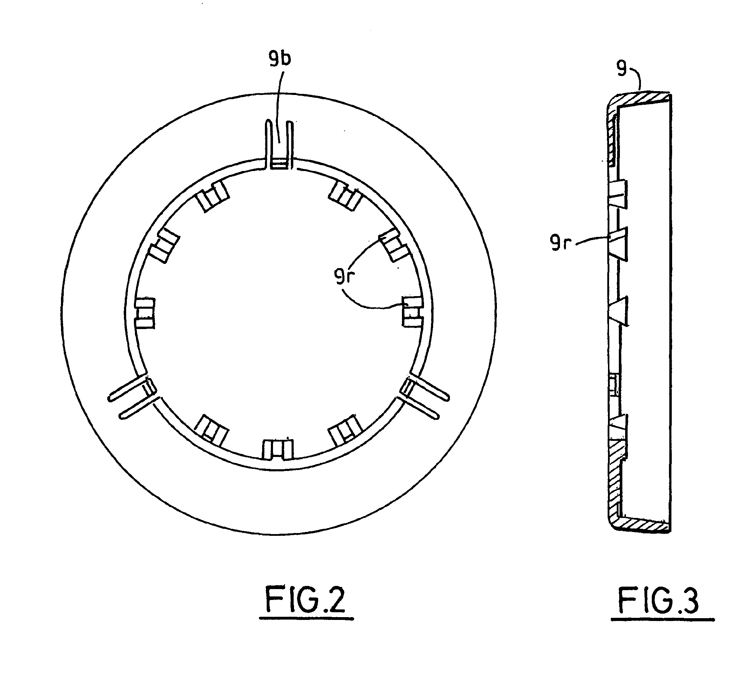

Conf or mément à la publication FR 2 821 652, les moyens de couplage sont propres à égaliser par frottement les vitesses de l'arbre 3, et d'un pignon 7, et à transformer le couple reçu du moyeu 8 en poussée axiale sur un pignon 7, de manière à transmettre eux-mêmes le couple par friction. L'anneau présente à cet effet des dents 9a, pourvues de rampes d'assistance 9r, grâce auxquelles il est capable de transformer le couple du moyeu en poussée axiale sur les autres anneaux. Les rampes 9r n'apparaissent pas sur la figure 1, mais sont montrées sur les figures 2 et 3. Les figures 1 et 2 montrent les pattes 9b, qui sont décalées axialement des autres dents en sens opposé au cône, et servent de plan d'appui du roulement du dispositif d'actionnement.

La mise en service du disposit if de couplage est assurée par le déplacement axial des anneaux 9, 11, 12, 13, et par la mise en contact des surfaces coniques en vis à vis, à l'aide d'un baladeur 27 de type roulement à billes, dont le déplacement axial est obtenu par le mouvement axial d'une fourchette 27a qui encercle le roulement 27b.

L'anneau supérieur 9, détaillé sur les figures 2 et 3, est solidaire du moyeu 8, par l'intermédiaire des dents 9a à flancs inclinés, en forme de dièdre, avec des rampes d'assistance 9r, qui permettent la transformation du couple transmis entre le moyeu et l'anneau supérieur en poussée axiale sur l'anneau. L'anneau supérieur, 9 réalisé de préférence à partir d'un flanc de tôle, a une épaisseur constante. Les dents 9a, réalisées par emboutissage, sont réparties dans la périphérie intérieure. Les pattes 9b, obtenues aussi par usinage ou déformation, sont au moins au nombre de trois, ou regroupées en trois groupes de pattes, réparties angulairement de manière équidistante. L'anneau 9 peut par exemple présenter trois secteurs identiques de dents 9a, et trois secteurs équidistants comportant au moins chacun une patte 9b, ou un groupe de pattes.

Les pattes 9b sont décalées axialement dans le sens opposé au cône. Elles définissent une face d'appui, qui reçoit, lors de l'actionnement, la poussée du roulement d'actionnement.

Lors de la mise en service du dispositif de couplage, les pattes 9b ne forment pas forcément un plan parallèle à celui de la bague intérieure du roulement d'actionnement. Donc, lors de la mise en action, le roulement entre en contact avec l'une des pattes au moins, puis par déformation de cette dernière sous la poussée, le roulement entre en contact avec la deuxième patte, puis dans un deuxième temps, entre en contact avec la troisième. Ainsi, un effort est transmis à chaque patte proportionnellement à sa déformation. La répartition des efforts est améliorée, par rapport à un appui sous forme de surface plane continue indéformable sur laquelle, en cas de défaut de parallélisme, l'effort n'est transmis qu'à une section angulaire réduite.

Le second anneau 11, dit intermédiaire, présente une surface conique extérieure, qui coopère avec la surface conique intérieure de l'anneau supérieur 9, et une surface conique intérieure qui coopère avec la surface conique extérieure de l'anneau inférieur 12. L'anneau intermédiaire 11 est solidaire du flasque 14 de support du cône 13, par une série de dents latérales 11a à flancs parallèles à son axe de symétrie. Il est réalisé à partir d'un flanc de tôle à épaisseur constante, et l'une ou les deux surfaces coniques sont susceptibles de recevoir un revêtement de friction.

Le troisième anneau 12, dit inférieur, est solidaire du moyeu 8 dans sa périphérie intérieure par l'intermédiaire de dents à flancs parallèles à l'axe de rotation, qui ne créent pas de poussée axiale induite sur l'anneau. La surface conique intérieure coopère avec la surface conique du cône 13. Il est réalisé à partir d'un flanc de tôle à épaisseur constante et l'une ou les deux surfaces coniques sont susceptibles de recevoir un revêtement de friction.

Le quatrième anneau 13, appelé simplement cône dans la présente description, est porté, et centré, par le flasque 14, qui assure sa liaison avec le pignon 7. Le cône 13 est solidaire du flasque 14 par une série de dents latérales 13a à flanc par allèles à son axe de rotation, et réparties de manière équidistantes. Il est réalisé à partir d'un flanc de tôle à épaisseur constante, et sa surface conique extérieure est susceptible de recevoir un revêtement de friction. Le flasque 14 est composé d'un flanc plat perpendiculaire à son axe de rotation. Dans sa périphérie extérieure, sont découpées de manière équidistante des encoches 14a, qui reçoivent les dents latérales 13a du cône, et les dents latérales 11a celles de l'anneau intermédiaire 11. Certaines encoches 14a reçoivent seulement les dents latérales 11a de l'anneau intermédiaire 11. D'autres encoches 14a, plus profondes, reçoivent aussi les dents latérales 13a du cône 13. De préférence, au moins trois encoches équidistantes 14a sont plus profondes, pour pouvoir entraîner le cône 13 et l'anneau intermédiaire 11.

L'assemblage du cône 13 et du flasque 14, peut être fait sous presse. L'ajustement des dents 13a et des encoches 14a donne alors un montage stable serré. Le cône peut aussi être monté flottant sur le flasque. Avec ce montage libre et flottant, le cône s'auto centre.

La liaison du flasque 14 et du pignon 7 est assurée par des retours de tôle 14b engagés dans les encoches 7a du pignon.

En conclusion, le fonctionnement et la performance du dispositif de couplage est amélioré grâce à une meilleure applicat ion de l'effort fourni par le roulement d'actionnement par l'intermédiaire des pattes d'appui déformables réalisées dans l'anneau supérieur. Ces mesures sont applicables dans des conditions analogues à tout système de coupleur conique, qu'il soit multicône ou simple cône.

## Revendications

1. Dispositif de couplage entre un arbre (3) de boîte de vitesses et un pignon fou (7) porté par celui-ci comportant un moyeu (8) fixé sur l'arbre (3), un roulement d'actionnement (27b), des moyens de couplage propres à égaliser par frottement les vitesses de l'arbre et du pignon et à transformer le mouvement de rotation reçu du moyeu en poussée axiale sur le pignon, de manière à transmettre eux-mêmes par friction le couple entre le moyeu et le pignon, ces moyens de couplage comprenant au moins un anneau supérieur (9) solidaire du moyeu qui transmet le couple à un cône (13) solidaire du pignon et un ressort de mise au repos (16) qui agit sur l'anneau supérieur (9) en repoussant ce dernier vers le moyeu (8) à l'écart du cône (13), **caractérisé en ce que** l'anneau supérieur (9) est pourvu dans sa partie périphérique intérieure de dents (9a) avec des rampes d'assistance (9r) transformant le couple du moyeu en poussée axiale sur les autres anneaux, et de pattes (9b) décalées axialement à l'opposé du cône, déformables élastiquement; et qui sont réalisés dans l'anneau (9) et définissent une face d'appui de celui-ci qui reçoit la poussée du roulement (27b) lors de l'actionnement.

2. Dispositif de couplage selon la revendication 1, **caractérisé en ce que** les moyens de couplage comprennent un ensemble de synchronisation multi-cônes qui inclut l'anneau supérieur (9) solidaire du moyeu, un anneau intermédiaire (11) solidaire du pignon (7), un anneau inférieur (12) solidaire du moyeu (8), et le cône (13) solidaire du pignon.

3. Dispositif de couplage selon la revendication 2, **caractérisé en ce que** le ressort de mise au repos (16) agit sur l'anneau supérieur (9) en repoussant ce dernier vers le moyeu (8) à l'écart des autres anneaux.

4. Dispositif de couplage selon la revendication 1, 2 ou 3, **caractérisé en ce que** l'anneau supérieur (9) présente trois secteurs identiques de dents (9a) et trois secteurs équidistants comportant au moins chacun une patte (9b).

## Claims

1. Coupling device providing the coupling between a gearbox shaft (3) and an idling pinion (7) carried thereby comprising a hub (8) attached to the shaft (3), an actuating rolling bearing (27b), coupling means capable through friction of equalizing the speeds of the shaft and of the pinion and of converting the rotational movement received from the hub into axial thrust on the pinion so as themselves through friction to transmit the torque between the hub and the pinion, these coupling means comprising at least one upper ring (9) secured to the hub which transmits the torque to a cone (13) secured to the pinion and a disengagement spring (16) which acts on the upper ring (9) pushing the latter back towards the hub (8) away from the cone (13), **characterized in that** the upper ring (9) is provided in its interior peripheral part with teeth (9a) that have assistance ramps (9r) converting the torque from the hub into axial thrust on the other rings, and with tabs (9b) axially offset on the opposite side to the cone, which are elastically deformable, and which are created in the ring (9) and define a bearing face of the latter which accepts the thrust from the rolling bearing (27b) at the time of actuation.

2. Coupling device according to Claim 1, **characterized in that** the coupling means comprise a multi-cone synchronizing assembly which includes the upper ring (9) secured to the hub, an intermediate ring (11) secured to the pinion (7), a lower ring (12) secured to the hub (8) and the cone (13) secured to the pinion.

3. Coupling device according to Claim 2, **characterized in that** the disengagement spring (16) acts on the upper ring (9) pushing the latter back towards the hub (8) away from the other rings.

4. Coupling device according to Claim 1, 2 or 3, **characterized in that** the upper ring (9) has three identical sectors of teeth (9a) and three equidistant sectors each comprising at least one tab (9b).

## Patentansprüche

1. Kopplungsvorrichtung zwischen einer Welle (3) eines Schaltgetriebes und einem von dieser getragenen Freilauf-Zahnrad (7), die eine auf der Welle (3) befestigte Nabe (8), ein Antriebs-Wälzlager (27b), Kopplungseinrichtungen, die in der Lage sind, durch Reibung die Geschwindigkeiten der Welle und des Zahnrads auszugleichen und die von der Nabe empfangene Drehbewegung in einen axialen Schub auf das Zahnrad umzuwandeln, um selbst durch Reibung das Drehmoment zwischen der Nabe und dem Zahnrad zu übertragen, wobei diese Kopplungseinrichtungen mindestens einen fest mit der Nabe verbundenen oberen Ring (9), der das Drehmoment auf einen fest mit dem Zahnrad verbundenen Kegel (13) überträgt, und eine Ruhestellungsfeder (16) enthalten, die auf den oberen Ring (9) einwirkt, indem sie diesen letzteren zur Nabe (8) weg vom Kegel (13) drückt, **dadurch gekennzeichnet, dass** der obere Ring (9) in seinem inneren Umfangsbereich mit Zähnen (9a) mit Hilfsrampen (9r), die das Drehmoment der Nabe in einen axialen Schub auf die anderen Ringe umwandeln, und mit axial entgegengesetzt zum Kegel versetzten, elastisch verformbaren Laschen (9b) versehen ist, die im Ring (9) hergestellt sind und eine Auflagefläche dieses Rings definieren, die den Schub des Wälzlagers (27b) bei der Betätigung aufnimmt.

2. Koppelvorrichtung nach Anspruch 1, **dadurch gekennzeichnet, dass** die Koppeleinrichtungen eine Mehrkegel-Synchronisationseinheit enthalten, die den fest mit der Nabe verbundenen oberen Ring (9), einen fest mit dem Zahnrad (7) verbundenen Zwischenring (11), einen fest mit der Nabe (8) verbundenen unteren Ring (12) und den fest mit dem Zahnrad verbundenen Kegel (13) umfasst.

3. Koppelvorrichtung nach Anspruch 2, **dadurch gekennzeichnet, dass** die Ruhestellungsfeder (16) auf den oberen Ring (9) einwirkt, indem sie diesen letzteren zur Nabe (8) weg von den anderen Ringen drückt.

4. Koppelvorrichtung nach Anspruch 1, 2 oder 3, **dadurch gekennzeichnet, dass** der obere Ring (9) drei gleiche Sektoren von Zähnen (9a) und drei gleich beabstandete Sektoren aufweist, die je mindestens eine Lasche (9b) aufweisen.
